# EUROPÄISCHE PATENTSCHRIFT

(11) **EP 3 215 407 B1**
(45) Veröffentlichungstag und Bekanntmachung des Hinweises auf die Patenterteilung: **03.05.2023**
(21) Anmeldenummer: 15790465.7
(22) Anmeldetag: 31.10.2015
(51) Int. Cl.: B60W 50/00, B60W 20/12, B60W 20/16

(54) **VERFAHREN ZUM BETREIBEN EINES KRAFTFAHRZEUGS**
METHOD FOR OPERATING A MOTOR VEHICLE
PROCÉDÉ DE FONCTIONNEMENT D'UN VÉHICULE AUTOMOBILE

(30) Priorität: 06.11.2014 DE 102014016420
(43) Veröffentlichungstag der Anmeldung: 13.09.2017
(73) Patentinhaber: Audi AG, 85045 Ingolstadt (DE)
(72) Erfinder: BLASINSKI, Boris, 85080 Gaimersheim (DE)
(74) Vertreter: Askaryar, Jama
(86) Internationale Anmeldenummer: PCT/EP2015/002189
(87) Internationale Veröffentlichungsnummer: WO 2016/070983

(56) Entgegenhaltungen:
- DE-A1-102008 025 569
- DE-A1-102011 014 164
- DE-A1-102012 009 674
- DE-A1-102013 200 856
- DE-U1-202013 102 636
- US-A1- 2014 074 386
- US-A1- 2014 081 563

## Beschreibung

Die Erfindung betrifft ein Verfahren zum Betreiben eines Kraftfahrzeugs, wobei das Kraftfahrzeug über eine Hybridantriebsvorrichtung verfügt, die eine elektrische Maschine, eine Brennkraftmaschine sowie einen der Brennkraftmaschine zugeordneten Partikelfilter aufweist, wobei die Brennkraftmaschine zeitweise zum Regenerieren des Partikelfilters betrieben wird.

Die Hybridantriebsvorrichtung ist dem Kraftfahrzeug zugeordnet beziehungsweise bildet einen Bestandteil von diesem. Mithilfe der Hybridantriebsvorrichtung kann ein Drehmoment bereitgestellt werden, welches auf ein Antreiben des Kraftfahrzeugs gerichtet ist. Die Hybridvorrichtung verfügt über mehrere Antriebsaggregate, welche vorzugsweise unterschiedlich ausgestaltet sind. Beispielsweise ist als ein erstes der Antriebsaggregate die elektrische Maschine und als ein zweites der Antriebsaggregate die Brennkraftmaschine vorgesehen. Die mehreren Antriebsaggregate sind derart ausgestaltet beziehungsweise wirkverbindbar, dass sie das auf das Antreiben des Kraftfahrzeugs gerichtete Drehmoment zumindest zeitweise gemeinsam erzeugen können. Insoweit ist es beispielsweise möglich, das Drehmoment nur mithilfe der elektrischen Maschine, nur mit der Brennkraftmaschine oder mit der elektrischen Maschine sowie der Brennkraftmaschine gemeinsam zu erzeugen.

Zur Reinigung von Abgas, welches von der Brennkraftmaschine während ihres Betriebs erzeugt wird, ist der Partikelfilter vorgesehen. Mithilfe des Partikelfilters können in dem Abgas vorhandene Partikel, insbesondere Rußpartikel, aus dem Abgas herausgefiltert werden. Diese Partikel sammeln sich mit der Zeit in dem Partikelfilter an. Ist die Brennkraftmaschine als Dieselbrennkraftmaschine ausgestaltet, so kann der Partikelfilter auch als Dieselrußpartikelfilter bezeichnet werden.

Um die in dem Partikelfilter anfallenden Partikel zu entfernen, ist es notwendig, den Partikelfilter zu regenerieren. Vorzugsweise werden die Partikel dabei verbrannt. Zu diesem Zweck wird beispielsweise die Brennkraftmaschine derart betrieben, dass die Temperatur des Abgases zu einer starken Erwärmung des Partikelfilters beziehungsweise der darin vorliegenden Partikel führt, sodass die Partikel verbrennen. Entsprechend ist es zum Regenerieren des Partikelfilters notwendig, dass die Brennkraftmaschine betrieben wird. Bei einem Kraftfahrzeug mit Hybridantriebsvorrichtung erwartet jedoch ein Fahrer des Kraftfahrzeugs große Anteile von elektrischen Fahrphasen, also Zeitabschnitten, in welchen das Kraftfahrzeug allein mittels der elektrischen Maschine angetrieben wird.

Beispielsweise ist aus der Druckschrift DE 10 2012 009 674 A1 ein Verfahren zum Bereitstellen von Routeninformationen in einem Steuergerät eines Kraftwagens bekannt, in dem Fahrroutendaten betreffend ein Fahrroutenprofil einer Fahrroute durch ein Navigationssystem ermittelt werden und in dem Navigationssystem diese Fahrroutendaten mittels einer Frequenztransformation transformiert werden. Hierdurch wird eine vorbestimmte Anzahl von Transformationskoeffizienten ermittelt, die von dem Navigationssystem zu dem Steuergerät übertragen werden. In dem Steuergerät werden dann aus den übertragenen Transformationskoeffizienten die benötigten Routeninformationen erzeugt.

Weiterhin sind aus dem Stand der Technik die Druckschriften US 2014/0074386 A1, US 2014/081563 A1, DE 10 2008 025 569 A1 und DE 10 2011 014 164 A1 bekannt.

Es ist nun Aufgabe der Erfindung, ein Verfahren zum Betreiben eines Kraftfahrzeugs vorzuschlagen, welches gegenüber dem Stand der Technik Vorteile aufweist, insbesondere eine Komfortverbesserung für den Fahrer des Kraftfahrzeugs bewirkt.

Dies wird erfindungsgemäß mit einem Verfahren mit den Merkmalen des Anspruchs 1 bewirkt. Dabei ist vorgesehen, dass das Regenerieren in einer ersten Betriebsart nur dann eingeleitet wird, wenn mittels einer Navigationseinrichtung festgestellt wird, dass ein zu durchfahrendes Elektrofahrgebiet vorausliegt, in dem ein Betrieb der Brennkraftmaschine und/oder das Regenerieren des Partikelfilters nicht erwünscht ist, wobei zum Regenerieren des Partikelfilters die Brennkraftmaschine derart betrieben wird, dass sie ein Antriebsmoment bereitstellt, das größer ist als ein zum Antreiben des Kraftfahrzeugs angefordertes Vorgabemoment, und ein Energiespeicher geladen wird, indem die elektrische Maschine mittels der Brennkraftmaschine angetrieben wird, wobei an der elektrischen Maschine ein Differenzmoment aus Antriebsmoment und Vorgabemoment anliegt, wobei der bei dem Laden des Energiespeichers zu erreichende Ladestand des Energiespeichers anhand der Länge eines in dem Elektrofahrgebiet liegenden Teils einer mittels der Navigationseinrichtung ermittelten voraussichtlichen Fahrstrecke des Kraftfahrzeugs ermittelt wird. Beispielsweise ermittelt die Navigationseinrichtung eine Fahrstrecke des Kraftfahrzeugs, entlang welcher sich das Kraftfahrzeug voraussichtlich bewegen wird. Vorzugsweise wird die Fahrstrecke anhand eines Startpunkts oder der momentanen Position des Kraftfahrzeugs einerseits sowie anhand eines Zielpunkts andererseits ermittelt. Der Zielpunkt kann beispielsweise von dem Fahrer des Kraftfahrzeugs vorgegeben sein oder vorausschauend von der Navigationseinrichtung ermittelt werden. In letzterem Fall bestimmt die Navigationseinrichtung die wahrscheinlichste Fahrstrecke des Kraftfahrzeugs ausgehend von dem Startpunkt oder der momentanen Position des Kraftfahrzeugs.

Die Navigationseinrichtung teilt die Fahrstrecke beziehungsweise voraussichtliche Fahrstrecke beispielsweise in unterschiedliche Gebiete ein. Insbesondere ist eines dieser Gebiete als Elektrofahrgebiet ausgestaltet. In diesem Elektrofahrgebiet ist der Betrieb der Brennkraftmaschine nicht erwünscht und/oder nicht zulässig, insbesondere aufgrund einer Erwartungshaltung des Fahrers oder gesetzlicher Regelungen. Beispielsweise liegt das Elektrofahrgebiet in einem städtischen Gebiet, insbesondere in einem Stadtzentrum, vor.

Ein anderes der Gebiete kann als Regenerierfahrgebiet ausgestaltet beziehungsweise gekennzeichnet sein. In dem Regenerierfahrgebiet sind das Betreiben der Brennkraftmaschine und insbesondere das Regenerieren des Partikelfilters ausdrücklich zugelassen oder sogar notwendig. Das Regenerierfahrgebiet kann beispielsweise auf einer Autobahn, einer Bundesstraße oder einer Landstraße vorliegen. Insbesondere weist das Regenerierfahrgebiet eine voraussichtliche Fahrstrecke auf, welche ausreichend ist, um das Regenerieren des Partikelfilters zumindest teilweise, insbesondere größtenteils, besonders bevorzugt vollständig, durchzuführen.

Liegt nun die erste Betriebsart vor, so wird das Regenerieren des Partikelfilters nur dann eingeleitet, wenn die Navigationseinrichtung anzeigt, dass das hinsichtlich der Fahrstrecke vorausliegende Gebiet als Elektrofahrgebiet ausgestaltet ist und insoweit in diesem die Brennkraftmaschine nicht betrieben werden soll oder darf, zumindest jedoch nicht zum Regenerieren des Partikelfilters. Das bedeutet, dass der Partikelfilter bereits auf das Durchfahren des Elektrofahrgebiets eingestellt wird, sodass auf demjenigen Teil der Fahrstrecke, welcher in dem Elektrofahrgebiet liegt, das Regenerieren des Partikelfilters nicht vorgenommen werden muss, beispielswiese weil sein Füllstand einen Grenzwert überschreitet. Vielmehr soll bevorzugt sichergestellt werden, dass der Partikelfilter bei dem Einfahren in das Elektrofahrgebiet einen Füllstand aufweist, welcher das Durchfahren zumindest eines Teils, insbesondere des größten Teils, besonders bevorzugt des gesamten Elektrofahrgebiets zulässt, ohne dass der Partikelfilter regeneriert werden muss.

Die Erfindung sieht vor, dass das Regenerieren in der ersten Betriebsart nur dann eingeleitet wird, wenn ein Füllstand des Partikelfilters größer als ein erster Grenzwert ist, wobei der erste Grenzwert ein Minimalfüllstand ist, der einem leeren Partikelfilter entspricht. Diese Bedingung tritt zu der vorstehend erläuterten Bedingung hinzu. Das Regenerieren wird insoweit in der ersten Betriebsart lediglich dann eingeleitet, wenn sowohl das zu durchfahrende Elektrofahrgebiet vorausliegt und der Füllstand größer ist als der erste Grenzwert. Der erste Grenzwert ist derart gewählt, dass das Regenerieren des Partikelfilters sinnvoll ist, der Partikelfilter also eine gewisse Anzahl an Partikeln enthält, welche verbrannt werden können.

Beispielsweise entspricht der Grenzwert dem Minimalfüllstand, der dem leeren Partikelfilter entspricht. Insoweit muss der Füllstand größer sein als der Minimalfüllstand, um das Regenerieren einleiten zu können. Vorzugsweise kann der erste Grenzwert auch größer als der Minimalfüllstand sein. Bezogen auf eine Differenz zwischen einem Maximalfüllstand, welcher einem vollständig gefüllten Partikelfilter entspricht, und dem Minimalfüllstand, kann der erste Grenzwert um mindestens 10 %, mindestens 20 %, mindestens 30 %, mindestens 40 % oder mindestens 50 % über dem Minimalfüllstand liegen. In letzterem Fall liegt der erste Grenzwert insoweit genau zwischen dem Minimalfüllstand und dem Maximalfüllstand.

Die Erfindung sieht vor, dass das Regenerieren in der ersten Betriebsart nur dann eingeleitet wird, wenn der Füllstand größer ist als ein zweiter Grenzwert, der größer als der erste Grenzwert ist. Es ist also vorgesehen, dass der Füllstand des Partikelfilters größer sein muss als vorstehend beschrieben. Der zweite Grenzwert liegt beispielsweise - wiederum bezogen auf die Differenz zwischen dem Minimalfüllstand und dem Maximalfüllstand - um mindestens 30 %, mindestens 40 %, mindestens 50 %, mindestens 60 %, mindestens 70 % oder mindestens 80 % über dem Minimalfüllstand. Dabei ist jedoch darauf zu achten, dass der zweite Grenzwert größer ist als der erste Grenzwert.

Erfindungsgemäss wird anhand einer Betriebsart des Kraftfahrzeugs beziehungsweise der Hybridantriebsvorrichtung festgelegt, ob das Regenerieren eingeleitet wird, wenn der Füllstand des Partikelfilters größer ist als der erste Grenzwert oder als der zweite Grenzwert. Insoweit wird der Grenzwert, mit welchem der Füllstand des Partikelfilters verglichen wird, anhand der Betriebsart aus dem ersten Grenzwert und dem zweiten Grenzwart ausgewählt. Erfindungsgemäss wird der erste Grenzwert ausgewählt, wenn die elektrische Maschine als Generator betrieben wird, um mit dem so erzeugten Strom einen Energiespeicher aufzuladen. Der zweite Grenzwert wird erfindungsgemäss ausgewählt, wenn ein Wechselbetrieb zwischen elektrischer Maschine und Brennkraftmaschine vorgesehen ist, also der Fahrbetrieb des Kraftfahrzeugs abwechselnd allein mit der elektrischen Maschine und allein mit der Brennkraftmaschine vorgenommen wird.

Eine Weiterbildung der Erfindung sieht vor, dass das Regenerieren erst in einem Regenerierfahrgebiet vorgenommen wird, wenn mittels der Navigationseinrichtung festgestellt wird, dass das Regenerierfahrgebiet durchfahren werden wird, insbesondere vor dem Elektrofahrgebiet. Wie bereits vorstehend erläutert, kann die Navigationseinrichtung die Fahrstrecke in unterschiedliche Gebiete einteilen, nämlich zumindest das Elektrofahrgebiet und das Regenerierfahrgebiet. Neben diesen können jedoch weitere Gebiete vorgesehen sein. Das Regenerieren des Partikelfilters soll insoweit nicht vorgenommen werden, wenn sich das Kraftfahrzeug momentan in dem Elektrofahrgebiet und/oder einem dieser weiteren Gebiete befindet. Vielmehr soll abgewartet werden, bis sich das Kraftfahrzeug in dem Regenerierfahrgebiet befindet. Dazu ist es jedoch notwendig, dass das Regenerierfahrgebiet auf der Fahrstrecke vor dem Elektrofahrgebiet liegt, also vor dem Elektrofahrgebiet von dem Kraftfahrzeug zumindest voraussichtlich durchfahren werden wird.

Die Erfindung sieht vor, dass das Regenerieren eingeleitet wird, wenn die Brennkraftmaschine derart betrieben wird, dass sie ein Antriebsmoment bereitstellt, das größer ist als ein zum Antreiben des Kraftfahrzeugs angefordertes Vorgabemoment. Das Vorgabemoment wird beispielsweise von dem Fahrer des Kraftfahrzeugs und/oder einer Fahrerassistenzeinrichtung vorgegeben. In ersterem Fall wird das Vorgabemoment beispielsweise anhand einer Stellung eines Bedienpedals, insbesondere eines Gaspedals, ermittelt. Das tatsächlich an der Brennkraftmaschine eingestellte Antriebsmoment kann jedoch größer sein als dieses Vorgabemoment, beispielsweise um mit der Differenz zwischen dem Antriebsmoment und dem Vorgabemoment die elektrische Maschine anzutreiben, insbesondere wenn diese generatorisch zum Erzeugen von elektrischem Strom betrieben wird. In diesem Fall kann ohne weiteres das Regenerieren eingeleitet werden, insbesondere sofern die erste Betriebsart vorliegt.

Die Erfindung sieht vor, dass ein Energiespeicher geladen wird, indem die elektrische Maschine mittels der Brennkraftmaschine angetrieben wird, wobei an der elektrischen Maschine ein Differenzmoment aus Antriebsmoment und Vorgabemoment anliegt. Auf diese Ausgestaltung wurde vorstehend bereits eingegangen. Das Kraftfahrzeug beziehungsweise die Hybridantriebsvorrichtung verfügt über den Energiespeicher, insbesondere einen Hochvoltenergiespeicher zum Betreiben der elektrischen Maschine. Alternativ kann der Energiespeicher selbstverständlich auch als Niedervoltenergiespeicher ausgestaltet sein, welcher eine niedrigere Spannung aufweist als der Hochvoltenergiespeicher. Der Energiespeicher wird nun mittels der elektrischen Maschine aufgeladen, wobei die elektrische Maschine generatorisch betrieben wird. Zu diesem Zweck wird die elektrische Maschine von der Brennkraftmaschine angetrieben.

In einer weiteren Ausgestaltung der Erfindung ist vorgesehen, dass der Energiespeicher geladen wird, wenn mittels der Navigationseinrichtung das vorausliegende Elektrofahrgebiet festgestellt wird. Wie bereits vorstehend erläutert, kann in dem Elektrofahrgebiet der Betrieb der Brennkraftmaschine nicht erwünscht sein. Entsprechend soll das Kraftfahrzeug darauf vorbereitet werden, das Elektrofahrgebiet zumindest teilweise, insbesondere größtenteils, besonders bevorzugt vollständig, allein mittels der elektrischen Maschine zu durchfahren, insbesondere also ohne Betreiben der Brennkraftmaschine. Dabei kann beispielsweise der bei dem Laden zu erreichende Ladestand des Energiespeichers anhand der Länge desjenigen Teils der Fahrstrecke ermittelt werden, welcher in dem Elektrofahrgebiet liegt.

In einer weiteren bevorzugten Ausgestaltung der Erfindung ist vorgesehen, dass bei einem Überschreiten eines dritten Grenzwerts durch den Füllstand des Partikelfilters in eine zweite Betriebsart gewechselt wird, in der das Regenerieren unverzüglich eingeleitet wird. Neben der vorstehend erläuterten ersten Betriebsart liegt also die zweite Betriebsart vor. Die zweite Betriebsart ist vorzugsweise eine Regenerationsbetriebsart, in welcher das Regenerieren unverzüglich vorgenommen wird. Beispielsweise wird in die zweite Betriebsart gewechselt, insbesondere aus der ersten Betriebsart, wenn der Füllstand des Partikelfilters den dritten Grenzwert überschreitet. Der dritte Grenzwert ist dabei insbesondere größer als der erste Grenzwert und/oder der zweite Grenzwert. Beispielsweise liegt der dritte Grenzwert - wiederum bezogen auf die Differenz zwischen dem Minimalfüllstand und dem Maximalfüllstand - um mindestens 50 %, mindestens 60 %, mindestens 70 %, mindestens 80 %, mindestens 90 % oder mindestens 95 % über dem Minimalfüllstand. Ist der dritte Grenzwert überschritten, so wird unverzüglich in die zweite Betriebsart gewechselt und der Partikelfilter regeneriert, um das Durchbrechen von Partikeln durch den Partikelfilter zu verhindern.

Schließlich kann in einer weiteren Ausgestaltung der Erfindung vorgesehen sein, dass in die erste Betriebsart gewechselt wird, wenn der Füllstand des Partikelfilters einen bestimmten Füllstand unterschreitet. Dies betrifft insbesondere den Wechsel von der zweiten Betriebsart in die erste Betriebsart. Während des Regenerierens des Partikelfilters sinkt der Füllstand des Partikelfilters ab. Ist der bestimmte Füllstand durch den Füllstand des Partikelfilters unterschritten, so kann das Regenerieren beendet und entsprechend aus der zweiten Betriebsart in die erste Betriebsart gewechselt werden. Der bestimmte Füllstand kann grundsätzlich beliebig gewählt sein. Der bestimmte Füllstand liegt beispielsweise - bezogen auf die Differenz zwischen dem Minimalfüllstand und dem Maximalfüllstand - bei höchstens 90 %, höchstens 80 %, höchstens 70 %, höchstens 60 %, höchstens 50 %, höchstens 40 %, höchstens 30 %, höchstens 20 %, höchstens 10 %. Der bestimmte Füllstand kann jedoch auch dem Minimalfüllstand, dem ersten Grenzwert, dem zweiten Grenzwert oder dem dritten Grenzwert entsprechen.

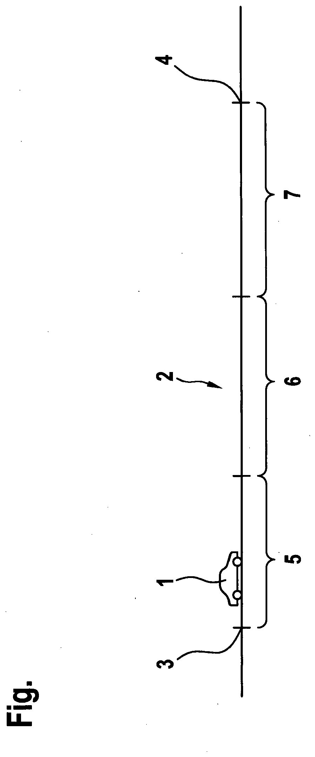

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: ein Kraftfahrzeug auf einer in mehrere Gebiete eingeteilten Fahrstrecke.

Die Figur zeigt ein Kraftfahrzeug 1, welches sich auf einer bestimmten Fahrstrecke 2 bewegt. Die Fahrstrecke 2 geht dabei beispielsweise von einem Startpunkt 3 aus und endet an einem Zielpunkt 4. Die Fahrstrecke 2 wird vorzugsweise von einer nicht dargestellten Navigationseinrichtung des Kraftfahrzeugs 1 ermittelt. Zu diesem Zweck kann der Startpunkt 3 der Position des Kraftfahrzeugs 1 bei dessen Betriebsbeginn entsprechen, während derZielpunkt 4 von einem Fahrer des Kraftfahrzeugs 1 vorgegeben wird oder wurde. Die Navigationseinrichtung teilt nun die Fahrstrecke 2 in mehrere Gebiete 5, 6 und 7 ein.

Das Gebiet 5 ist beispielsweise ein Hybridfahrgebiet, das Gebiet 6 ein Regenerierfahrgebiet und das Gebiet 7 ein Elektrofahrgebiet. Das bedeutet, dass in dem Gebiet 5 hybridisch gefahren werden soll, wobei abwechselnd allein die elektrische Maschine und allein die Brennkraftmaschine zum Antreiben des Kraftfahrzeugs herangezogen werden. Das Gebiet 7 liegt als Elektrofahrgebiet vor, in welchem vorzugsweise das Kraftfahrzeug allein mittels der elektrischen Maschine bewegt werden soll. Das bedeutet, dass in dem Gebiet 7 ein Betrieb der Brennkraftmaschine oder zumindest ein Regenieren eines der Brennkraftmaschine zugeordneten Partikelfilters nicht erwünscht ist. Das Gebiet 6 ist dagegen als Regenerierfahrgebiet ausgestaltet, in welchem insbesondere das Regenerieren der Partikelfilters zugelassen ist.

Wird insoweit mittels der Navigationseinrichtung festgestellt, dass das Elektrofahrgebiet 7 vorausliegt, wird vorausschauend in einer ersten Betriebsart ein Regenerieren des Partikelfilters eingeleitet. Dies ist insbesondere der Fall, falls ein Energiespeicher mittels der dann generatorisch betriebenen elektrischen Maschine geladen werden soll. Zu diesem Zweck erzeugt die Brennkraftmaschine ein Antriebsmoment, welches größer ist als ein Vorgabemoment, welches vorzugsweise von dem Fahrer des Kraftfahrzeugs und/oder einer Fahrerassistenzeinrichtung festgelegt wird. Die Differenz zwischen dem Antriebsmoment und dem Vorgabemoment wird zum Antreiben der elektrischen Maschine und insoweit zum Erzeugen von elektrischem Strom zum Aufladen des Energiespeichers herangezogen. Der Energiespeicher wird dabei besonders bevorzugt so weit geladen, dass das Kraftfahrzeug 1 allein mittels der elektrischen Maschine, welche mit der in dem Energiespeicher gespeicherten elektrischen Energie betrieben wird, das Elektrofahrgebiet 7 durchqueren kann, zumindest teilweise, vorzugsweise größtenteils oder sogar vollständig.

Mit einer derartigen Vorgehensweise wird eine Irritation des Fahrers durch ein unerwartetes Starten der Brennkraftmaschine und/oder unerwartete Betriebsgeräusche der Brennkraftmaschine verhindert. Entsprechend steigt der dem Fahrer von dem Kraftfahrzeug gebotene Fahrkomfort.

## Patentansprüche

1. Verfahren zum Betreiben eines Kraftfahrzeugs (1), wobei das Kraftfahrzeug (1) über eine Hybridantriebsvorrichtung verfügt, die eine elektrische Maschine, eine Brennkraftmaschine sowie einen der Brennkraftmaschine zugeordneten Partikelfilter aufweist, wobei die Brennkraftmaschine zeitweise zum Regenerieren des Partikelfilters betrieben wird, **dadurch gekennzeichnet, dass**
- das Regenerieren eingeleitet wird, wenn die Brennkraftmaschine derart betrieben wird, dass sie ein Antriebsmoment bereitstellt, das größer ist als ein zum Antreiben des Kraftfahrzeugs (1) angefordertes Vorgabemoment, wobei ein Energiespeicher geladen wird, indem die elektrische Maschine mittels der Brennkraftmaschine angetrieben wird, wobei an der elektrischen Maschine ein Differenzmoment aus Antriebsmoment und Vorgabemoment anliegt, dass
- das Regenerieren in einer ersten Betriebsart nur dann eingeleitet wird, wenn mittels einer Navigationseinrichtung festgestellt wird, dass ein zu durchfahrendes Elektrofahrgebiet (7) vorausliegt, in dem ein Betrieb der Brennkraftmaschine und/oder das Regenerieren des Partikelfilters nicht erwünscht ist, wobei der bei dem Laden des Energiespeichers zu erreichende Ladestand des Energiespeichers anhand der Länge eines in dem Elektrofahrgebiet liegenden Teils einer mittels der Navigationseinrichtung ermittelten voraussichtlichen Fahrstrecke des Kraftfahrzeugs ermittelt wird, und dass
- das Regenerieren in der ersten Betriebsart nur dann eingeleitet wird, wenn ein Füllstand des Partikelfilters größer ist als ein Grenzwert, wobei bei einem Betrieb der elektrischen Maschine als Generator ein einem leeren Partikelfilter entsprechender erster Grenzwert und bei einem Vornehmen des Fahrbetriebs des Kraftfahrzeugs (1) abwechselnd allein mit der elektrischen Maschine und allein mit der Brennkraftmaschine ein größer als der erste Grenzwert gewählter zweiter Grenzwert als Grenzwert verwendet wird.

2. Verfahren nach Anspruch 1, **dadurch gekennzeichnet, dass** das Regenerieren erst in einem Regenerierfahrgebiet (6) vorgenommen wird, wenn mittels der Navigationseinrichtung festgestellt wird, dass das Regenerierfahrgebiet (6) durchfahren werden wird, insbesondere vor dem Elektrofahrgebiet (7).

3. Verfahren nach einem der vorhergehenden Ansprüche, **dadurch gekennzeichnet, dass** bei einem Überschreiten eines dritten Grenzwerts durch den Füllstand des Partikelfilters in eine zweite Betriebsart gewechselt wird, in der das Regenerieren unverzüglich eingeleitet wird.

4. Verfahren nach einem der vorhergehenden Ansprüche, **dadurch gekennzeichnet, dass** in die erste Betriebsart gewechselt wird, wenn der Füllstand des Partikelfilters einen bestimmten Füllstand unterschreitet.

## Claims

1. Method for operating a motor vehicle (1), wherein the motor vehicle (1) has a hybrid drive device which has an electric motor, an internal combustion engine and a particle filter assigned to the internal combustion engine, wherein the internal combustion engine is operated at times to regenerate the particle filter, **characterised in that**
- the regeneration is initiated when the internal combustion engine is operated such that it provides a drive torque which is greater than a preset torque required for driving the motor vehicle (1), wherein an energy store is charged **in that** the electric motor is driven by means of the internal combustion engine, wherein a differential torque of drive torque and preset torque is applied to the electric motor, that
- the regeneration is initiated in a first operational mode only when it is determined by means of a navigational device that an electric driving area (7) lies ahead for in which an operation of the internal combustion engine and/or the regeneration of the particle filter is not desired, wherein the charging state of the energy store to be achieved when charging the energy store is determined on the basis of the length of a portion, situated in the electric driving area, of an expected driving route, determined by means of the navigational device, of the motor vehicle, and that
- the regeneration In the first operational mode for is initiated only when a fill level of the particle filter is greater than a threshold value, wherein during operation of the electric motor has a generator a first threshold value corresponding to an empty particle filter is used as a threshold value and in the event of a driving operation of the motor vehicle (1) alternatingly only with the electric motor and only with the internal combustion engine, a second threshold value selected to be greater than the first threshold value is used as a threshold value.

2. Method according to claim 1, **characterised in that** the regeneration is undertaken only in a regeneration driving area (6) when it is determined by means of the navigation device that the regeneration driving area (6) will be driven through, in particular before the electric driving area (7).

3. Method according to any of the preceding claims, **characterised in that** when the fill level of the particle filter exceeds a third threshold value, a switch is made to a second operational mode in which the regeneration is immediately initiated.

4. Method according to any of the preceding claims, **characterised in that** a switch is made to the first operational mode when the fill level of the particle filter undershoots a specified fill level.

## Revendications

1. Procédé de fonctionnement d'un véhicule automobile (1), dans lequel le véhicule automobile (1) dispose d'un dispositif d'entraînement hybride qui présente un moteur électrique, un moteur à combustion interne ainsi qu'un filtre à particules associé au moteur à combustion interne, dans lequel le moteur à combustion interne fonctionne temporairement pour régénérer le filtre à particules, **caractérisé en ce que**
- la régénération est initiée lorsque le moteur à combustion interne fonctionne de telle manière qu'il fournisse un couple d'entraînement qui est supérieur à un couple de prescription exigé pour l'entraînement du véhicule automobile (1), dans lequel un accumulateur d'énergie est chargé **en ce que** le moteur électrique est entraîné au moyen du moteur à combustion interne, dans lequel un couple différentiel issu du couple d'entraînement et du couple de prescription s'applique sur le moteur électrique, que
- la régénération dans un premier mode de fonctionnement n'est initiée que lorsqu'il est constaté au moyen d'un appareil de navigation qu'une zone de circulation en mode électrique (7) à parcourir se trouve en aval, dans lequel un fonctionnement du moteur à combustion interne et/ou la régénération du filtre à particules n'est pas souhaitée, dans lequel l'état de charge de l'accumulateur d'énergie à atteindre lors de la charge de l'accumulateur d'énergie est déterminé à l'aide de la longueur d'une partie se trouvant dans la zone de circulation en mode électrique d'un trajet probable déterminé au moyen de l'appareil de navigation du véhicule automobile, et que
- la régénération dans le premier mode de fonctionnement n'est initiée que lorsqu'un état de remplissage du filtre à particules est supérieur à une valeur limite, dans lequel une première valeur limite correspondant à un filtre à particules vide est utilisée lors d'un fonctionnement du moteur électrique comme générateur et une deuxième valeur limite choisie plus grande que la première valeur limite est utilisée comme valeur limite lors d'une réalisation du mode de conduite du véhicule automobile (1) en alternance seulement avec le moteur électrique et seulement avec le moteur à combustion interne.

2. Procédé selon la revendication 1, **caractérisé en ce que** la régénération n'est entreprise que dans une zone de circulation en mode de régénération (6) lorsqu'il est constaté au moyen de l'appareil de navigation que la zone de circulation en mode de régénération (6) sera parcourue, en particulier avant la zone de circulation en mode électrique (7).

3. Procédé selon l'une quelconque des revendications précédentes, **caractérisé en ce qu'**en cas de dépassement d'une troisième valeur limite par le niveau de remplissage du filtre à particules, le véhicule passe dans un second mode de fonctionnement, dans lequel la régénération est immédiatement initiée.

4. Procédé selon l'une quelconque des revendications précédentes, **caractérisé en ce que** le véhicule passe dans le premier mode de fonctionnement lorsque le niveau de remplissage du filtre à particules reste en dessous d'un niveau de remplissage déterminé.
